**Europäisches Patentamt**

**(19)** **European Patent Office**

**Office européen des brevets**

**(11)** Publication number : **0 407 995 B1**

## **(12)** EUROPEAN PATENT SPECIFICATION

**(45)** Date of publication of patent specification :
03.03.93 Bulletin 93/09

**(51)** Int. Cl.⁵ : **A23L 1/29,** A23L 1/304,
A21D 2/36, A21D 13/02

**(21)** Application number : 90113242.3

**(22)** Date of filing : 11.07.90

**(54)** Dietetic compositions containing deacylated phospholipids.

**(30)** Priority : 13.07.89 IT 2117189

**(43)** Date of publication of application :
16.01.91 Bulletin 91/03

**(45)** Publication of the grant of the patent :
03.03.93 Bulletin 93/09

**(84)** Designated Contracting States :
AT BE CH DE DK ES FR GB GR IT LI LU NL SE

**(56)** References cited :
EP-A- 0 259 167
FR-A- 2 154 397
FR-A- 2 617 680
FOOD TECHNOLOGY, vol. 38, no. 1, January
1984, pages 64-69, Chicago, Illinois, US; J.L.
VETTER: "Fiber as a Food Ingredient"

**(73)** Proprietor : **DEPHA TEAM S.r.l.**
**Via Cassanese, 224, Palazzo Tiepolo**
**I-20090 Segrate (Milano) (IT)**

**(72)** Inventor : **Palazzi, Camillo Maria Francesco**
**Giulio**
**Via Cassanese, 224, Palazzo Tiepolo**
**I-20090 Segrate (Milano) (IT)**
Inventor : **Procida, Carla**
**Via Cassanese, 224, Palazzo Tiepolo**
**I-20090 Segrate (Milano) (IT)**
Inventor : **Scolastico, Silvia**
**via Cassanese, 224, Palazzo Tiepolo**
**I-20090 Segrate (Milano) (IT)**

**(74)** Representative : **Minoja, Fabrizio**
**Studio Consulenza Brevettuale Via Rossini, 8**
**I-20122 Milano (IT)**

## Description

The present invention concerns dietetic compositions containing soy natural deacylated phospholipids.

The phospholipids are one of the hot topic in the biochemical research. Their presence in the cell membranes and in lipoproteins accounts for the crucial role they play in different biological functions such as oxidative phosphorylation, active transport, mitosis, etc..

The phospholipids have recently given rise to interest because of their prophylactic action against atherosclerotic pathology and of optimizing action with respect to neurotransmission.

In particular, it has often been found the positive relationship between a suitable phospholipid intake and the onset of said actions and it has also been ascertained an often insufficient phospholipid intake.

Significant problems connected with the intake of said substances are represented by the relative complexity of the deacylation processes necessary for their absorption, by the possible degradation of the saturated and unsaturated fatty acids bound thereto making their preservation difficult and, finally, by the cellular peroxidation processes connected with their presence and ascribable to the unsaturation of the acyl chains.

It is known that the phospholipids after oral administration are cleaved in the gastro-enteric tract by specific phospholipases. Thus, phospholipase $A_1$ specifically hydrolizes the ester bond in position 1 whereas phospholipase $A_2$ hydrolizes that in position 2 producing a monoacylphospholipid named lysophosphatidyl-choline, -ethanolamine, -serine, -inositol.

As reported in literature (H. Van den Bosch in "Phospholipids", J.N. Hawthorne e G.B. Ansell, Eds., Elsevier Biomedical Press, Amsterdam, p. 313 "Phospholipases"; H. Van den Bosch, Ann. Rev. Biochem., 43, 243 (1974); A.J. Slotboom, H.M. Werheij, G.H. de Hass in "Phospholipases" J.N. Hawthorne, G.B. Ansell, Eds./, Elsevier Biomedical Press, p. 359, On the Mechanism of phospholipases $A_2$"; E.G. Lapetina, Ann. Rep. in Med. Chem., 19, 213 (1984)), the phospholipids yielding glycerophosphobases by complete deacylation of 1-acyl- or 2-acyl-glycero phosphobases or of the deacylated phospholipids are widely spread (bowel, lung, spleen, liver, pancreas, muscles, kidneys, testis, brain, blood) (H. Van den Bosch, L.M.G. Van Golde, L.L.M. Van Deenen, Ann. Rev. Physiol., 66, 13-145 (1972); E.A. Marples, R.H.S. Thompson, Biochem. J., 74 123-127 (1960)).

The catabolic part of the diacylglycerophospholipids turnover is thought to occur in most cells by means of a stepwise deacylation catalyzed by phospholipases $A_1$, $A_2$ and ubiquitous lysophospholipases. It is also true that the "de novo" synthesis of phospholipids involves the acylation of the hydroxy group in position 1 with saturated fatty acids and of that in position 2 with unsaturated fatty acids.

The biosynthesis of polyinsaturated phospholipids and particularly of phosphatidylinositol is significantly influenced by the alimentary intake of their precursors such as essential fatty acids, choline or, better, glycerophosphorylcholine, inositol or, more completely, glycerophosphorylinositol.

However the modern diet may be in different cases deficient as far as the intake of said substances is concerned and this is mostly due to processing operations to which different foods such as oils, flours, rice etc. are subjected.

It has been calculated that the amount of bioavailable choline for a common "western-type" diet is about 300 mg/day whereas the recommended daily intake is 900 mg/day.

There are therefore the conditions for considering that the onset of a state of latent deficiency of choline and inositol is a true risk and that said pre-deficiency affects the phospholipid biosynthesis negatively.

The relative insufficiency of said substances in the diet may then cause the functional impairment of various enzymes (monoaminoxidases, ATPase, citidyl-phosphoryl-choline transferase, etc.) and also the structural impairment of plasmalemma and of the inner mithochondrial membrane.

It has been found that the dietetic intake of a mixture of natural deacylated phospholipids (glycerophosphorylcholine, glycerophosphorylethanolamine, glycerophosphorylinositol, glycerophosphorylserine) gives the ideal solution to the problem of deficiency of the essential precursors for the phospholipid biosynthesis.

Natural deacylated phospholipids, which are obtained from selected soy lecithins, allow in fact the preparation of alimentary integrators having, in comparison with similar known products comprising lecithins, i.e natural acylated phospholipids, the following advantages:

- ready bioavailability of deacylated phospholipids which may be immediately used by the organism;
- optimal organoleptic characteristics;
- hydrosolubility which can allow an easy formulation in different presentation forms suited also for the administration to elderly subjects and to infants;
- high stability and absence of degradation phenomena due to the peroxydation of unsaturated fatty acids.

Said advantages are obtained using natural deacylated phospholipids, prepared by total saponification of the phosphatides mixtures contained in deoleated soy lecithin for alimentary use.

The present composition (by weight) of the single components of the deacylated mixture is the following:

glycerophosphorylcholine          30-50%

| glycerophosphorylethanolamine | 20-40% |
| glycerophosphorylinositol | 10-20% |
| glycerophosphorylserine | 2-5% |

The compositions of the present invention can also contain other active ingredients or integrators having coadjuvant, complementary or anyway useful activities.

Preferred embodiments of the invention include, for instance, samples of deacylated phospholipids added with nutritional elements giving even more peculiar and specific characteristics to the compositions.

Examples of nutritional elements which can be used to this purpose are :

- alimentary fibres which can reduce an excessive food intake and normalize the intestinal functions, such as pectins, guar and konjac ( which can also decrease fat and carbohydrates absorptions and bile salt concentration in colon);

- zinc or zinc compounds, any deficiencies thereof involve negative physiological effects, particularly in case of chronic hepatoses or ageing phenomena;

- selenium or selenium compounds, which are useful due to the well known antiperoxide action thereof, which involves a protection of cellular and subcellular membranes against oxidative damages. A selenium deficiency is related to an increased risk of occurrence of tumoral forms, according to recent studies;

- vitamins, in particular vitamins A, E and C, which are known to have antioxidant properties and also to be cofactors or some important enzyme systems;

- essential fatty acids, particularly linolenic acid, which can favourably affect prostaglandin biosynthesis from arachidonic acid;

- amino acids, specifically branched amino acids (leucine, alanine and valine), whose administration is useful in case of hepatopathies.

The dietetic compositions of the present invention are prepared according to conventional techniques and excipients. Examples of said compositions comprise syrups, beverages, jellies, candies, tablets

The unitary dose ranges from 50 to 300 mg of deacylated natural phospholipid mixture, preferably about 100 mg.

The following examples further illustrate the invention.

## EXAMPLE 1. SYRUP

100 ml of syrup (one dose = 5 ml) contain :

| | |
|---|---|
| Natural total complex of deacylated phosphatides from soy lecithin, equal to 2 g of pure deacylated phosphatides | g 3,40 |
| sodium carboxymethylcellulose | g 2,50 |
| nipagine (p-hydroxybenzoates) | g 0,15 |
| saccharose | g 50,0 |
| flavours | g 1,60 |
| food dye | g 0,10 |
| depurated water | q.b. a 100 ml |

## EXAMPLE 2. MONODOSE SYRUP

Each dose (10 ml) contains :

a) <u>in the reservoir</u>

Natural total complex of deacylated phosphatides

from soy lecithin, equal to 100 mg of pure deacy-

| | | |
|---|---|---|
| lated phosphatides | mg | 170 |
| glucose | mg | 220 |
| precipitated silica | mg | 10 |

b) <u>in the syrup</u>

| | | |
|---|---|---|
| sodium carboxymethyl cellulose | mg | 125 |
| nipagine | mg | 15 |
| flavours | mg | 100 |
| food dye | mg | 10 |
| saccharose | g | 5 |
| depurated water | q.b. a | 10 ml |

## EXAMPLE 3. FRUIT BEVERAGE

100 ml (one dose = 50 ml) contain :

Natural total complex of deacylated phosphatides

from soy lecithin, equal to 200 mg of pure deacy-

| | | |
|---|---|---|
| lated phosphatides | g | 0,34 |
| simple syrup | g | 70,00 |
| concentrated fruit juice | g | 6,00 |
| ascorbic acid | g | 0,80 |
| nipagine | g | 0,15 |
| flavour | g | 1,00 |
| food dye | g | 0,10 |
| depurated water | q.b. a | 100 ml |

## EXAMPLE 4. EXTEMPORARY BEVERAGE (10 g sachet)

10 g ( = one dose) contain :

natural total complex of deacylated phosphatides
from soy lecithin, equal to 100 mg of pure deacy-
lated phosphatides

|  |  |
|---|---|
| lated phosphatides | mg 170 |
| glucose | mg 2500 |
| citric acid | mg 240 |
| flavour | mg 250 |
| food dye | mg 3 |
| saccharose | q.b. a 10 g |

### EXAMPLE 5. SOLUBLE GRANULATE

100 g ( one dose = 1 doser spoon) contain :

100 g ( one dose = 1 doser spoon) contain :
natural total complex of deacylated phosphatides
from soy lecithin, equal to 2.00 g of pure deacy-

|  |  |
|---|---|
| lated phosphatides | g 3,40 |
| precipitated silica | g 0,50 |
| flavour | g 0,50 |
| food dye | g 0,05 |
| glucose | q.b. a 100 g |

### EXAMPLE 6. FRUIT JELLIES

100 g ( one dose = 10 g) contain :

Natural total complex of deacylated phosphatides
from soy lecithin, equal to 1.00 g of pure deacy-

|  |  |
|---|---|
| lated phosphatides | g 1,70 |
| glucose syrup (E.D. 42) | g 26,00 |
| pectin powder | g 1,50 |
| citric acid | g 1,00 |
| depurated water | g 200,00 ca |
| flavour | g 1,00 |
| food dye | g 0,50 |
| saccharose | q.b. a 100 g |

### EXAMPLE 7. TABLETS

100 g contain :

Natural total complex of deacylated phosphatides
from soy lecithin with a 58.82% titre in pure de-

| | | | |
|---|---|---|---|
| acylated phospholipids | 4,25 | 4,25 | 17,00 |
| microcrystalline cellulose | – | – | 21,00 |
| lactose | 59,00 | – | 35,00 |
| citric acid | 3,00 | 19 | 3 |
| sodium bicarbonate | – | 23 | – |
| flavours | 1,3 | 1,3 | 5,00 |
| magnesium stearate | 0,5 | – | 1,00 |
| precipitated silica | 0,5 | – | 0,5 |
| saccharose | q.b. | q.b. | q.b. |
| **weight of one tablet** | **4** | **4** | **1** |

### EXAMPLE 8. CANDIES

100 g (one candy = 4 g) contain :

Natural total complex of deacylated phosphatides
from soy lecithin having a 58.82% titre in pure
deacylated phosphatides                        g   4,250

| | | |
|---|---|---|
| glucose | g | 10,000 |
| anhydrous citric acid | g | 19,000 |
| food dye | g | 10,000 |
| flavour | g | 0,060 |
| saccharose | g | 0,300 |

### EXAMPLE 9

### DEACYLATED PHOSPHATIDES ADDED WITH FIBRES. CHEWABLE TABLETS.

100 g contain :

| | | |
|---|---|---|
| glycerophosphorylcholine (GPC) calcium salt | g | 28,500 |
| glycerophosphorylethanolamine (GPE) calcium salt | g | 19,000 |
| avicel | g | 12,000 |
| precipitated silica | g | 8,000 |
| lemon pectins | g | 9,000 |
| glucomannanes | g | 9,000 |
| galactomannanes | g | 9,000 |
| explotab | g | 3,500 |
| magnesium stearate | g | 1,500 |
| zinc sulfate | g | 0,500 |
| | | 100,000 |

## EXAMPLE 10.

## DEACYLATED PHOSPHATIDES ADDED WITH VITAMINS AND MINERAL SALTS.

## CHEWABLE TABLETS.

100 g contain :

| | | |
|---|---|---|
| orange flavour powder | g | 40,000 |
| magnesium stearate + saccharose | g | 13,500 |
| GPC calcium salt | g | 9,000 |
| GPE calcium salt | g | 6,000 |
| mannitol | g | 10,000 |
| microcrystalline cellulose | g | 10,000 |
| epo oil (essential fatty acids)* | g | 5,000 |
| vitamin C | g | 4,500 |
| vitamin E | g | 1,500 |
| vitamin A | 75.000 U.I. | |
| sodium selenite | 0,005 | |
| zinc sulfate | 0,500 | |

\* extracted from Oenothera biennis

## EXAMPLE 11

## DEACYLATED PHOSPHOLIPIDS ADDED WITH BRANCHED CHAIN AMINO ACIDS.

## CHEWABLE TABLETS.

100 g contain :

```
orange flavour powder                        g 35,000
mannitol
magnesium stearate                           g 21,000
microgranular cellulose
starch
GPC calcium salt                             g 12,000
GPE calcium salt                             g  8,000
L-leucine            .                       g 12,000
L-isoleucine                                 g  6,000
L-valine                                     g  6,000
                                             100,000
```

Claims

Claims for the following Contracting States : DE, GB, FR, IT, NL, SE, LI, CH, BE, AT, LU, DK, ES, GR

1.  Dietetic compositions containing deacylated natural phospholipids from selected soy lecithins.

2.  Dietetic compositions as claimed in claim 1, containing 50 to 300 mg per unitary dose of deacylated phospholipid mixture.

3.  Dietetic compositions as claimed in claims 1 or 2, containing 30 to 50% by weight glycerophosphorylcholine, 20 to 40% by weight glycerophosphorylethanolamine and 2 to 5% by weight glycerophosphorylserine.

4.  Dietetic compositions as claimed in any one of the preceding claims, containing other active ingredients or integrators having coadjuvant, complementary or useful activities.

5.  Dietetic compositions as claimed in claim 4, further containing at least one active ingredient or integrator selected from the group consisting of alimentary fibres, zinc, zinc compounds, selenium, selenium compounds, vitamins, essential fatty acids, amino acids.

6.  Dietetic compositions as claimed in any one of the preceding claims, in form of syrup, beverage, jelly, tablet, candy, granulate.

**Patentansprüche**

**Patentansprüche für folgende Vertragsstaaten : DE, GB, FR, IT, NL, SE, LI, CH, BE, AT, LU, DK, ES, GR**

1. Diätetische Zusammensetzungen, enthaltend deacylierte natürliche Phospholipide, ausgewählt aus Sojalecithinen.

2. Diätetische Zusammensetzungen nach Anspruch 1, enthaltend 50 bis 300 mg pro Einheitsdosis Gemisch an deacylierten Phospholipiden.

3. Diätetische Zusammensetzungen nach Anspruch 1 oder 2, enthaltend 30 bis 50 Gew.-% Glycerophosphorylcholin, 20 bis 50 Gew.-% Glycerophosphorylethanolamin und 2 bis 5 Gew.-% Glycerophosphoylserin.

4. Diätetische Zusammensetzungen nach einem der vorhergehenden Ansprüche, enthaltend andere aktive Bestandteile oder Integratoren, welche Wirkung als Co-Hilfsstoff, komplementäre oder nützliche Wirkungen aufweisen.

5. Diätetische Zusammensetzungen nach Anspruch 4, weiter enthaltend mindestens einen aktiven Bestandteil oder Integrator, ausgewählt aus der Gruppe Speisefasern, Zink, Zinkverbindungen, Selen, Selenverbindungen, Vitaminen, essentiellen Fettsäuren, Aminosäuren.

6. Diätetische Zusammensetzungen nach einem der vorhergehenden Ansprüche in Gestalt von Sirup, Getränk, Gelee, Tabletten, Süßigkeiten, Granulat.


**Revendications**

**Revendications pour les Etats contractants suivants : DE, GB, FR, IT, NL, SE, LI, CH, BE, AT, LU, DK, ES, GR**

1. Compositions diététiques contenant des phospholipides naturels désacylés de lécithines de soja sélectionnées.

2. Compositions diététiques selon la revendication 1, caractérisées en ce qu'elles contiennent de 50 à 300 mg de mélange de phospholipides désacylés par dose unitaire.

3. Compositions diététiques selon l'une des revendications 1 ou 2, caractérisées en ce qu'elles contiennent de 30 à 50% en poids de glycérophosphorylcholine, de 20 à 40% en poids de glycérophosphoryléthanolamine et de 2 à 5% en poids de glycérophosphorylsérine.

4. Compositions diététiques selon l'une quelconque des revendications précédentes, caractérisées en ce qu'elles contiennent d'autres ingrédients actifs ou intégrateurs ayant des activités coadjuvantes, complémentaires ou utiles.

5. Compositions diététiques selon la revendication 4, caractérisées en ce qu'elles contiennent en outre au moins un ingrédient actif ou intégrateur choisi dans le groupe constitué par les fibres alimentaires, le zinc, les composés du zinc, le sélénium, les composés du sélénium, les vitamines, les acides gras essentiels, les acides aminés.

6. Compositions diététiques selon l'une quelconque des revendications précédentes, caractérisées en ce qu'elles sont sous forme de sirop, de boisson, de gelée, de comprimé, de bonbon, de granulé.